(19) Europäisches Patentamt
European Patent Office
Office européen des brevets

(11) **EP 4 560 147 A1**

(12) **EUROPEAN PATENT APPLICATION**

(43) Date of publication:
28.05.2025 Bulletin 2025/22

(21) Application number: 24214822.9

(22) Date of filing: **22.11.2024**

(51) International Patent Classification (IPC):
F15B 15/14 (2006.01)          F15B 15/22 (2006.01)
F15B 15/20 (2006.01)          F16F 9/49 (2006.01)
F16F 9/512 (2006.01)          F15B 15/17 (2006.01)
F16F 9/48 (2006.01)

(52) Cooperative Patent Classification (CPC):
F15B 15/1447; F15B 15/149; F15B 15/202;
F15B 15/204; F15B 15/228; F16F 9/48; F16F 9/49;
F16F 9/5126; F15B 15/17; F15B 2211/40507;
F15B 2211/41581; F16F 9/483

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.11.2023 KR 20230163600**

(71) Applicant: **Korea Aerospace Research Institute
Daejeon 34133 (KR)**

(72) Inventor: **YANG, Seongpil
34133 Daejeon (KR)**

(74) Representative: **Mathys & Squire
Theatinerstraße 7
80333 München (DE)**

Remarks:
A request for correction of descriprion has been filed
pursuant to Rule 139 EPC. A decision on the request
will be taken during the proceedings before the
Examining Division (Guidelines for Examination in
the EPO, A-V, 3.).

(54) **HIGH RELIABILITY VARIABLE SPEED HYDRAULIC DEVICE**

(57)    The present disclosure relates to a variable speed hydraulic device, and relates to an invention that improves the reliability of a hydraulic device by using a 2-way valve with simple control, and efficiently controls a cylinder motion speed of a hydraulic actuator by providing a hydraulic damper in conjunction with a hydraulic actuator.

**EP 4 560 147 A1**

**Description**

**TECHNICAL FIELD**

The following disclosure relates to a high reliability variable speed hydraulic device, and more particularly, to providing a hydraulic device capable of speed control without using a proportional control valve to improve the reliability of speed control of a hydraulic actuator.

**BACKGROUND**

A hydraulic actuator is an actuator that operates by a flow rate, and is a device that ultimately converts hydraulic pressure into mechanical energy. A hydraulic actuator is generally configured to include a cylinder and a piston that performs a stroke motion inside the cylinder, and the piston performs a stroke motion by a flow rate of fluid flowing inside the cylinder.

In order to change the motion speed of the piston, a valve is used to control the flow rate that is introduced into the cylinder or discharged out of the cylinder, and a separate control system is required to control the degree of opening and closing of the valve, which causes a problem in that the reliability of the entire device decreases.

[Related Art Document]

[Patent Document]

(Patent Document 1) Korean Patent Laid-Open Publication No. 10-2002-0017701 (published on March 7, 2002)

**SUMMARY**

An embodiment of the present disclosure is directed to providing a hydraulic device with improved reliability.
Another embodiment of the present disclosure is directed to providing a hydraulic device capable of moving according to desired motion conditions.
In one general aspect, a hydraulic device includes: a piston unit; A hydraulic actuator that accommodates at least a part of the piston unit inside to implement a stroke motion of the piston unit; and a hydraulic damper that accommodates at least a part of the piston unit other than the part accommodated in the hydraulic actuator inside to control a stroke motion speed of the piston unit, in which the piston unit moves in conjunction with the hydraulic actuator and the hydraulic damper.
The hydraulic actuator may include an actuator cylinder that stores a first fluid inside and provides a space in which the piston unit performs the stroke motion according to a flow of the first fluid, the hydraulic damper may include a damper cylinder that stores a second fluid inside, and the piston unit may move the inside of the actuator cylinder and the inside of the damper cylinder simultaneously.
The piston unit may include an actuator piston head that is accommodated inside the actuator cylinder and performs the stroke motion in the actuator cylinder, and a damper piston head that is accommodated inside the damper cylinder and performs the stroke motion in the damper cylinder.
The piston unit may include a connection member that connects the actuator piston head and the damper piston head.
The connection member may cause the actuator piston head and the damper piston head to move together in conjunction with each other, and when the actuator piston head ascends inside the actuator cylinder, the damper piston head may also ascend inside the damper cylinder, and when the actuator piston head descends inside the actuator cylinder, the damper piston head may also descend inside the damper cylinder.
The piston unit may include a power transmission member that transmits kinetic energy of the actuator piston head to the outside, and one side of the actuator piston head may be coupled to the power transmission member, and the other side of the actuator piston head may be coupled to the connection member.
The hydraulic actuator may include an inlet port through which fluid is introduced into the actuator cylinder, and an outlet port through which the fluid is discharged out of the actuator cylinder, and a control valve that controls an outflow of the fluid is provided in the outlet port.
The control valve may be a 2-way valve controlled to be in an open state or a closed state.
The actuator piston head may ascend inside the actuator cylinder when the control valve is in the closed state, and descend inside the actuator cylinder when the control valve is in the open state.
The inner space of the actuator cylinder may be divided into an upper chamber as an upper space and a lower chamber as a lower space based on the actuator piston head, and the actuator piston head may be provided with a through hole to allow the first fluid introduced into the internal space of the actuator cylinder to flow from the upper chamber to the lower chamber.

A cross-sectional area of a portion where the first fluid is discharged through the outlet port may be wider than that of the through hole.

The hydraulic device may further include: a speed control member that is disposed to surround an inner wall of the damper cylinder and controls a stroke motion speed of the piston unit.

The speed control member may include a protrusion that protrudes toward a center of the damper cylinder and a recession that is recessed toward the inner wall of the damper cylinder.

At least one protrusion may be formed and at least one recession may be formed, and the protrusion and recession may be continuously formed along a height direction of the damper cylinder.

When the damper piston head is positioned at the protrusion, the stroke motion speed of the piston unit may decrease, and when the damper piston head is positioned at the recession, the stroke motion speed of the piston unit may increase.

**BRIEF DESCRIPTION OF THE DRAWINGS**

FIG. 1 is a schematic diagram of a hydraulic device according to an embodiment of the present disclosure.

FIG. 2 is a diagram illustrating the hydraulic actuator according to an embodiment of the present disclosure.

FIG. 3 is a diagram illustrating a piston unit according to an embodiment of the present disclosure.

FIG. 4 is a schematic diagram of a hydraulic device according to a first embodiment of the present disclosure.

FIG. 5 is a schematic diagram of a hydraulic device according to a second embodiment of the present disclosure.

FIG. 6 is a schematic diagram of a hydraulic device according to a third embodiment of the present disclosure.

FIGS. 7 and 8 are diagrams for describing a stroke motion of a piston unit according to an embodiment of the present disclosure.

FIG. 9 is a cross-sectional view taken along line A-A of FIG. 3.

FIG. 10 is a diagram for describing a hydraulic damper according to an embodiment of the present disclosure.

FIG. 11 is a diagram schematically illustrating the hydraulic damper according to an example of the present disclosure.

FIG. 12 is a cross-sectional view taken along the line B-B of FIG. 11.

FIGS. 13A to 13C, FIG. 14A to 14B and FIG. 15A to 15C are diagrams exemplarily illustrating various shapes of a speed control member according to an example of the present disclosure.

[Detailed Description of Main Elements]

| 1000: | Hydraulic device |
|---|---|
| 100: | Piston unit |
| 120: | Actuator piston head |
| 121: | Through hole |
| 130: | Damper piston head |
| 140: | Connection member |
| 150: | Power transmission member |
| 200: | Hydraulic actuator |
| 210: | Actuator cylinder |
| 220: | Inlet port |
| 230: | Outlet port |
| 235: | Control value |
| 251: | Upper chamber |
| 252: | Lower chamber |
| 300: | Hydraulic damper |
| 310: | Damper cylinder |
| 320: | Speed control member |
| 321: | Protrusion |
| 322: | Recession |

## DETAILED DESCRIPTION OF EMBODIMENTS

Hereinafter, the present disclosure will be described in detail with reference to the attached drawings. However, this is merely exemplary, and the present disclosure is not limited to the specific embodiments described by way of example.

A hydraulic device 1000 according to an example of the present disclosure may be applied to a space launch vehicle fixing device, an aircraft catapult, an automobile crash test device, a free-fall test device, etc.

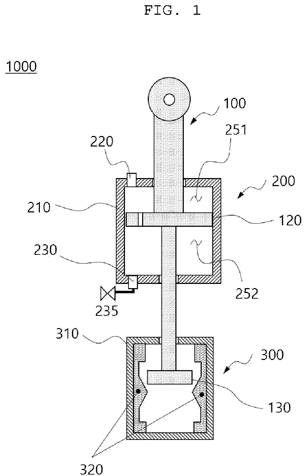

Hereinafter, the hydraulic device 1000 according to an example of the present disclosure will be described in detail with reference to FIG. 1.

FIG. 1 schematically illustrates a cross-sectional view of the hydraulic device 1000 according to an example of the present disclosure.

Hereinafter, referring to FIG. 1, the hydraulic device 1000 according to an example of the present disclosure may include a piston unit 100, a hydraulic actuator 200, and a hydraulic damper 300, and the piston unit 100 may move in conjunction with the hydraulic actuator 200 and the hydraulic damper 300.

The hydraulic actuator 200 is a device that accommodates at least a part of the piston unit 100 inside and generates a flow rate to provide a force for moving the piston unit 100.

The hydraulic actuator 200 may cause fluid to flow inside the actuator cylinder 210, including the actuator cylinder 210. In this case, the fluid flowing inside the actuator cylinder 210 is called a first fluid. The actuator cylinder 210 may store the first fluid inside, and provide a space in which the piston unit 100 performs a stroke motion according to the flow of the first fluid.

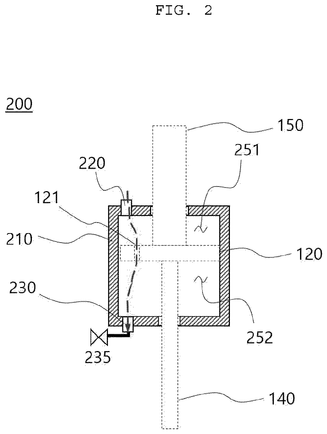

Hereinafter, the hydraulic actuator 200 will be described in detail with reference to FIG. 2. The hydraulic actuator 200 can further include an inlet port 220 through which the first fluid is introduced into the actuator cylinder 210, an outlet port 230 through which the first fluid is discharged out of the actuator cylinder 210, and a control valve 235 that controls the flow rate of the fluid discharged to the outlet port 230.

A cross-sectional area of a hole into which the first fluid is introduced through the inlet port and a cross-sectional area of the hole into which the first fluid is discharged through the outlet port may be determined by physical properties of the first fluid, specifications of the actuator cylinder 210, etc., and the flow rate of the first fluid may be controlled depending on how the cross-sectional area of the hole described above is designed to control the stroke motion of the piston unit 100.

The first fluid may be introduced into the actuator cylinder 210 or discharged out of the actuator cylinder 210. An energy source that allows the first fluid to flow into the actuator cylinder 210 is maintained continuously, but the outflow of fluid is controlled by opening or closing the path to the outside via the control valve 235, thereby generating the stroke motion of the piston unit 100.

Specifically, the control valve 235 may be a 2-way valve controlled to an open or closed state. Since the stroke motion of the piston unit 100 may be implemented only by controlling the on/off operation of the valve, it is possible to improve the control reliability of the valve. In addition, there is an advantage in that the 2-way valve has a low possibility of failure due to its simple structure and has a long replacement cycle due to its stable operation over a long period of time, and the convenience of maintenance of the hydraulic device increases. Furthermore, since the motion of the piston unit 100 may be stably implemented through the 2-way valve control with the simple structure, it is possible to improve the reliability of the hydraulic device.

Meanwhile, when the control valve 235 is closed, the piston unit 100 ascends, and when the control valve 235 is open, the piston unit 100 descends. The details thereof will be described later.

Next, the hydraulic damper 300 will be described again with reference to FIG. 1. The hydraulic damper 300 is a means for absorbing the kinetic energy of the piston unit 100 when the flow rate is generated in the hydraulic actuator 200 and the piston unit 100 moves, and for controlling the motion speed of the piston unit 100. The piston unit 100 may accommodate at least a portion other than the portion accommodated in the hydraulic actuator 200, thereby controlling the stroke motion speed of the piston unit 100.

Specifically, the hydraulic damper 300 may include a damper cylinder 310 storing a second fluid therein, and the above-described first fluid may be introduced into the actuator cylinder 210 or discharged out of the actuator cylinder 210, while the second fluid may be maintained in a state in which a certain amount is stored inside the damper cylinder 310.

The hydraulic damper 300 may further include a speed control member 320 that is disposed to surround an inner wall of the damper cylinder 310 and controls a stroke motion speed of the piston unit 100. The speed control member 320 includes a protrusion that protrudes toward a center of the damper cylinder and a recession that is recessed toward the inner wall of the damper cylinder.

A second fluid may be stored inside the damper cylinder 310, and when the damper piston head 130, which performs the stroke motion inside the damper cylinder 310, is positioned at the protrusion, the resistance due to the second fluid increases, so the motion speed of the damper piston head 130 may decrease, and when the damper piston head 130 is positioned at the recession, the resistance due to the second fluid decreases, so the motion speed of the damper piston head 130 may increase.

In this way, the motion speed of the damper piston head 130 may be controlled due to the shape of the second fluid stored inside the damper cylinder 310 and the speed control member 320, and as a result, the stroke motion speed of the actuator piston head 120 may also be controlled.

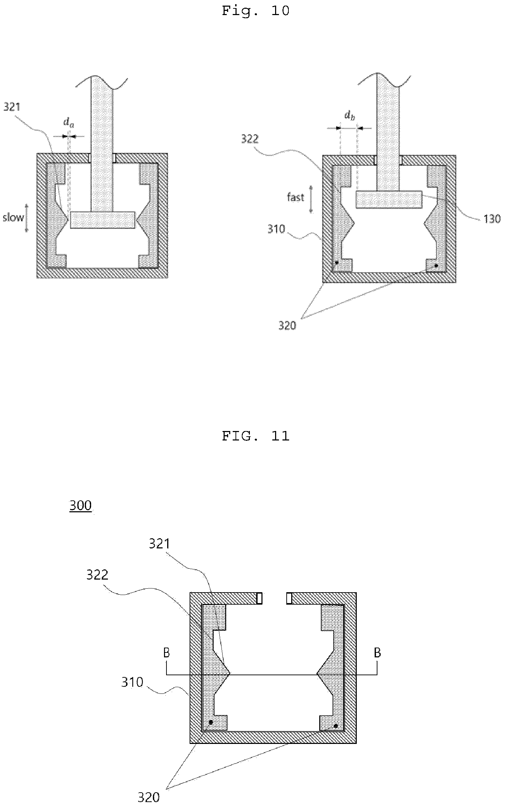

Furthermore, a user may select the type of the second fluid by considering the physical properties such as viscosity of the second fluid, and thus, it is also possible to control the stroke motion speed. Hereinafter, the specific shape of the speed control member 320 will be described with reference to FIG. 10.

Meanwhile, the first fluid flowing through the hydraulic actuator 200 and the second fluid flowing through the hydraulic damper 300 are fluids that flow independently, and there may be no correlation between the first fluid and the second fluid. In other words, the first fluid and the second fluid may be the same or different.

However, the first fluid may be selected in consideration of the energy efficiency aspect of the hydraulic actuator 200, and the second fluid may be selected in consideration of the speed control performance of the hydraulic damper 300, so it may be preferable that the first fluid and the second fluid are selected as different fluids.

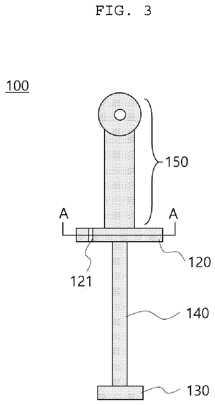

Next, the piston unit 100 will be described with reference to FIG. 3. The piston unit 100 is a means for converting hydraulic pressure into mechanical energy by performing an up-and-down reciprocating linear motion using hydraulic pressure inside the cylinder.

The piston unit 100 according to an example of the present disclosure may include the actuator piston head 120 that is accommodated inside the actuator cylinder 210 and performs the stroke motion in the actuator cylinder 210, and the damper piston head 130 that is accommodated inside the damper cylinder 310 and performs the stroke motion in the damper cylinder 310, and may further include a connection member 140 that connects the actuator piston head 120 and the damper piston head 130.

The connection member 140 connects the actuator piston head 120 and the damper piston head 130, which are composed of separate parts, so the two parts are linked to each other and move together.

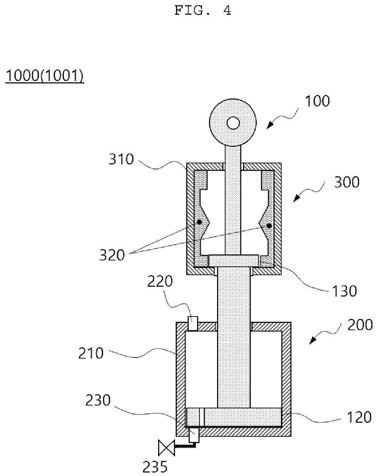

In FIG. 3, the piston unit 100 is illustrated in a form in which the actuator piston head 120 and the damper piston head 130 are connected in series, but the form of the piston unit 100 is not limited thereto and may be provided in various forms depending on the arrangement relationship of the actuator cylinder 210 and the damper cylinder 310. Hereinafter, the arrangement relationship of the actuator 210 and the damper cylinder 310 will be described with reference to FIGS. 4 to 6.

The first embodiment of the present disclosure will be described with reference to FIG. 4. This example corresponds to a 'series type' in which the actuator cylinder 210 and the damper cylinder 310 are disposed in series. As illustrated in FIG. 4, the form in which the damper cylinder 310 is disposed at the top and the actuator cylinder 210 is disposed at the bottom is also possible, and as illustrated in FIG. 1, the form in which the actuator cylinder 210 is disposed at the top and the damper cylinder 310 is disposed at the bottom is also possible.

According to the first embodiment of the present disclosure, since a length of the stroke may be easily adjusted, it may be suitable for work that requires moving a target object in a wide space. In addition, since the structure is simple, the convenience of manufacturing and maintenance may increase.

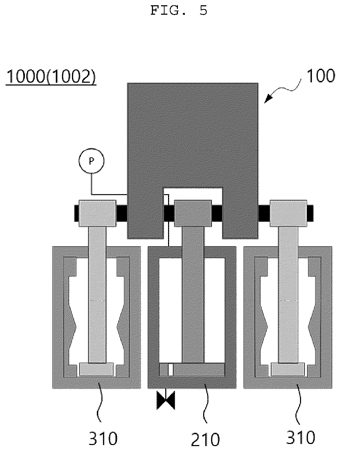

A second embodiment of the present disclosure will be described with reference to FIG. 5. This example corresponds to a 'parallel type' in which the actuator cylinder 210 and the damper cylinder 310 are disposed in parallel. FIG. 5 illustrates an example in which the actuator cylinder 210 is disposed in the center and the damper cylinders 310 are each disposed on both sides, but the number of damper cylinders 310 is not limited thereto.

According to the second embodiment of the present disclosure, the power of the entire system increases, making it suitable for work that requires lifting a heavy load or strong power. In addition, by setting the design conditions of the plurality of damper cylinders 310 differently, there may be the advantage in that the system can be adjusted to various work conditions.

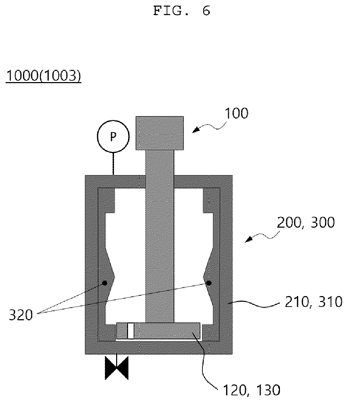

Finally, a third embodiment of the present disclosure will be described with reference to FIG. 6. This example corresponds to an 'integrated type' in which the actuator cylinder 210 and the damper cylinder 310 are configured as a single cylinder.

According to the third embodiment of the present disclosure, the structure is simple, so the design and manufacturing may be easy, and the number of parts may decrease, which may be desirable in terms of cost reduction.

The arrangement structure of the actuator cylinder 210 and the damper cylinder 310 has been described above, and for the convenience of the following description, the description will be centered on the case in which the actuator cylinder 210 and the damper cylinder 310 are arranged in series (series type). However, the following description may be equally applied to the case in which the actuator cylinder 210 and the damper cylinder 310 are installed in parallel (parallel type) and the case in which the actuator cylinder 210 and the damper cylinder 310 are installed in an integrated manner (integrated type).

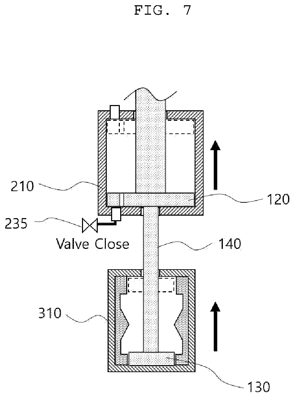

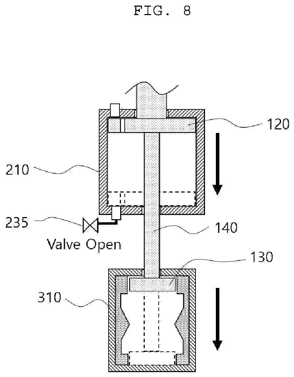

Next, with reference to FIGS. 7 and 8, the method in which the piston unit 100 performs the stroke motion in the hydraulic actuator 200 and the hydraulic damper 300 will be described.

As illustrated in FIG. 7, when the control valve 235 is in a closed state, that is, when the first fluid is not discharged out of the actuator cylinder 210, the actuator piston head 120 ascends inside the actuator cylinder 210, and the damper piston head 130 connected to the actuator piston head 120 by the connection member 140 may also ascends inside the damper cylinder 310.

On the other hand, as illustrated in FIG. 8, when the control valve 235 is in an open state, that is, when the first fluid is discharged out of the actuator cylinder 210, the actuator piston head 120 descends inside the actuator cylinder 210, and as a result, the damper piston head 130 may also descend inside the damper cylinder 310.

In other words, according to an example of the present disclosure, the piston head that reciprocates inside the actuator cylinder 210 and the piston head that reciprocates inside the damper cylinder 310 may be provided separately, and by providing the piston heads separately, the transmission efficiency of mechanical energy generated by the hydraulic pressure and the efficiency of controlling the motion speed of the piston unit 100 may be improved.

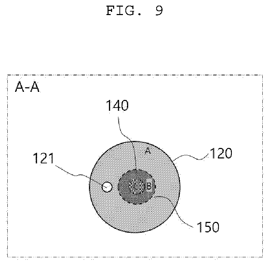

Next, the method in which the actuator piston head 120 reciprocates in a linear manner inside the actuator cylinder 210 will be described in detail with reference to FIG. 9. FIG. 9 is a cross-sectional view of the actuator piston head 120, which schematically illustrates a cross-sectional view taken along line A-A of FIG. 3.

The piston unit 100 may further include a power transmission member 150 that transmits mechanical kinetic energy of the actuator piston head 120 to the outside. One side of the actuator piston head 120 may be coupled to the power transmission member 150, and the other side of the actuator piston head may be coupled to the connection member 140.

Referring to FIG. 9, an area of one surface of the actuator piston head 120, to which the power transmission member 150 is coupled and not exposed, corresponds to area B and area C, and a surface area exposed to the internal space of the cylinder corresponds to area A. An area of the other surface of the actuator piston head 120, to which the connection member 140 is coupled and not exposed, corresponds to area C, and a surface area exposed to the internal space of the cylinder corresponds to area A and area B.

As illustrated, the surface area (area A of FIG. 9) of one side where the actuator piston head 120 is coupled to the power transmission member 150 may be smaller than the surface area (area in which area A and area B of FIG. 9 are coupled) of the other side where the actuator piston head 120 is coupled to the connection member 140. In this way, due to the difference in the area exposed to the internal space of the actuator piston head 120 in the actuator cylinder 210, a force is generated inside the cylinder (see the formula below), and the stroke motion of the actuator piston head 120 may be implemented.

[Equation]

F (force) = P (pressure) × A (area)

Next, referring back to FIG. 2, the hydraulic actuator 200 and a through hole 121 will be described. The actuator piston head 120 is configured to perform linear reciprocating motion, i.e., stroke motion, inside the actuator cylinder 110. In this case, the internal space of the actuator cylinder 110 may be divided into an upper chamber 251 corresponding to the upper space and a lower chamber 252 corresponding to the lower space based on the actuator piston head 120.

The through hole 121 penetrating through the piston head may be formed in the actuator piston head 120, and the first fluid introduced into the actuator cylinder 210 may pass through the upper chamber 251, the through hole 121, and the lower chamber 252 in sequence to be stored inside the actuator cylinder 210 or discharged through the outlet port 230. The flow of the first fluid is illustrated by the dotted arrow in FIG. 2.

Specifically, the cross-sectional area of the portion where the first fluid is discharged out of the outlet port 230 may be wider than that of the through hole 121.

An energy source (such as a pump) that introduces the first fluid into the actuator cylinder 210 may be provided in the inlet port 220, and the first fluid is introduced into the actuator cylinder 210 through the inlet port 220, and the introduced first fluid is introduced into the lower chamber through the through hole 121, and when the control valve 235 is in the open state, the first fluid is discharged through the outlet port 230.

In this case, the cross-sectional area of the through hole 121 should be designed to be smaller than that of the outlet port 230 so that the flow rate discharged out of the lower chamber becomes greater than the flow rate introduced into the lower chamber, and thus, all of the first fluid existing inside the lower chamber may escape. In other words, the cross-sectional area of the through hole 121 should be designed to be smaller than that of the outlet port 230, so the piston unit 100 may implement the reciprocating linear motion to the bottom of the actuator cylinder 210.

Next, the hydraulic damper 300 according to an example of the present disclosure will be described in detail with reference to FIGS. 10 to 12.

The hydraulic damper 300 is a means for absorbing the kinetic energy of the piston unit 100 when the flow rate is generated in the hydraulic actuator 200 and the piston unit 100 moves, and for controlling the motion speed of the piston unit 100.

As described above, the hydraulic damper 300 may include the damper cylinder 310 storing the second fluid therein, and the damper piston head 130 may resist the flow of the second fluid and move inside the damper cylinder 310, thereby controlling the motion speed of the actuator piston head 120.

The hydraulic damper 300 may further include the speed control member 320 that is disposed to surround the inner wall of the damper cylinder 310 and controls the stroke motion speed of the piston unit 100.

In this case, the speed control member 320 may be manufactured integrally with the cylinder wall of the damper cylinder 310, or the cylinder wall and the speed control member 320 may be manufactured separately and the speed control member 320 may be inserted into the cylinder.

The speed control member 320 includes a protrusion 321 that protrudes toward the center of the damper cylinder 310 and a recession 322 that is recessed toward the inner wall of the damper cylinder. This is to control the motion speed of the damper piston head by controlling the gap between the damper piston head and the cylinder wall, which will be described below with reference to FIG. 10.

As illustrated on the left in FIG. 10, when the damper piston head 130 is positioned at a height where the protrusion 321 is formed, a gap $d_a$ between the damper piston head 130 and the speed control member 320 narrows, and the resistance due to the second fluid increases, so the motion speed of the damper piston head 130 decreases.

Meanwhile, as illustrated on the right in FIG. 10, when the damper piston head 130 is positioned at a height where the recession 322 is formed, a gap $d_b$ between the damper piston head 130 and the speed control member 320 is wide, and the resistance due to the second fluid decreases, so the motion speed of the damper piston head 130 increases.

In this way, the speed control member 320 has the protrusion 321 that protrudes toward the center of the damper cylinder 310 and the recession 322 that is recessed toward the inner wall of the damper cylinder 310, so the damper piston head 130 may increase or decrease the speed of the linear motion when the linear reciprocating motion is performed.

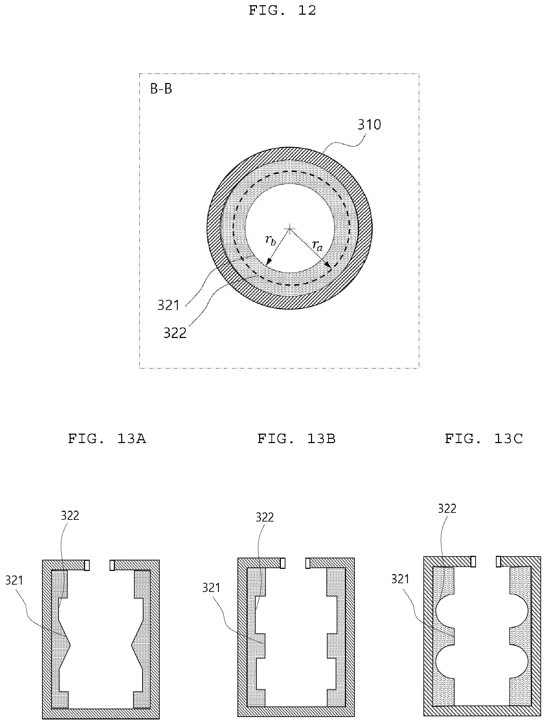

FIG. 11 is a diagram schematically illustrating the hydraulic damper 300, and FIG. 12 is a B-B cross-sectional view of FIG. 11. As illustrated in FIGS. 11 and 12, the speed control member 320 may include the protrusion 321 that protrudes toward the center of the damper cylinder 310 and the recession 322 that is recessed toward the inner wall of the damper cylinder 310 That is, a distance $r_b$ from the center of the damper cylinder 310 to the protrusion 321 is smaller than a distance $r_a$ from the center to the recession 322.

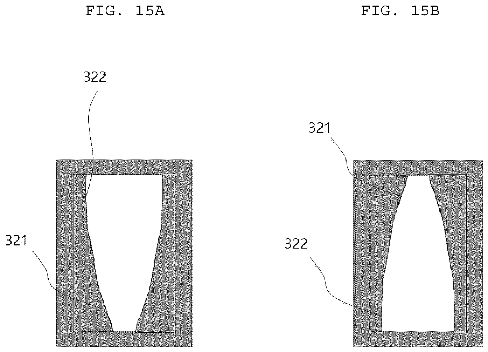

Next, the shapes of the recession 322 and the protrusion 321 will be described with reference to FIGS. 13A and 13B and 15A and 15B. The shapes of the recession 322 and the protrusion 321 illustrated in the drawings are merely exemplary, and it is sufficient if the shape of the recession that is further away from the center of the damper cylinder 310 and the shape of the protrusion that is closer are provided.

At least one protrusion 321 may be formed, and at least one recession 322 may be formed, and the protrusion 321 and the recession 322 may be formed continuously along the height direction of the damper cylinder 310.

FIGS. 13A to 13C illustrate an example in which two recessions 322 and one protrusion 321 are formed, and illustrate that the recession 322-protrusion 321-recession 322 are formed continuously along the height direction of the cylinder from the bottom to the top of FIG. 10.

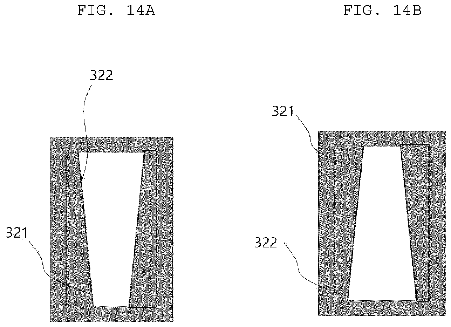

Meanwhile, as illustrated in FIGS. 14 to 15, the distance from the center of the damper cylinder 310 to the speed control member may linearly increase or decrease from one side of the damper cylinder 310 to the other side (see FIGS. 14A and 14B), or may nonlinearly increase or decrease (see FIGS. 15A and 15B). That is, the speed control member may have the protrusion 321 having the closest distance from the center of the damper cylinder 310 to the speed control member and the recession 322 having the farthest distance from the center of the damper cylinder 310 to the speed control member.

In this way, the speed control member 320 according to an example of the present disclosure may be designed in various shapes, and the versatility of the hydraulic device 1000 may be improved by designing the protrusion 321 and recession 322 of the speed control member 320 so that the hydraulic device 1000 moves according to desired motion conditions.

Meanwhile, the hydraulic device 1000 described above may be used in a projectile fixing device 2000 described later. The projectile fixing device is a device that fixes a projectile to the ground and releases the fixation when the projectile is launched so that the projectile may be launched stably.

In this way, the projectile fixing device needs to release the fixation after fixing the projectile when the projectile is launched. However, if the release process is carried out rapidly, there is a problem that the launch stability of the projectile is reduced.

Therefore, in order to increase the launch stability of the projectile, a device that controls the progress speed of the release process is required, and for this purpose, the hydraulic device 1000 according to an example of the present disclosure may be used.

The projectile fixing device 2000 according to an example of the present disclosure may include the above-described hydraulic device 1000 and the projectile fixing unit. In this case, one side of the projectile fixing unit supports the lower portion of the projectile so that the projectile may be fixed to the ground, and the other side of the projectile fixing unit is connected to the hydraulic device 1000 so that the launch speed of the projectile may be adjusted when the projectile is launched. Specifically, the hydraulic damper 300 adjusts the motion speed of the piston unit 100, so the launch speed of the projectile may be adjusted together. In this way, according to an example of the present disclosure, the launch speed of the projectile may be adjusted, thereby providing an advantage in that the launch stability of the projectile may be improved.

According to an embodiment of the present disclosure, it is possible to improve the reliability of the hydraulic device, and improve the versatility of the hydraulic device by providing a hydraulic device that may move according to the desired motion conditions.

Although embodiments of the present disclosure have been described hereinabove with reference to the accompanying drawings, those skilled in the art to which the present disclosure pertains will be able to understand that the present disclosure may be implemented in other specific forms without departing from the spirit or essential feature of the present disclosure. Therefore, it is to be understood that embodiments described hereinabove are illustrative rather than being restrictive in all aspects.

**Claims**

1. A hydraulic device, comprising:

   a piston unit;
   a hydraulic actuator that accommodates at least a part of the piston unit inside to implement a stroke motion of the piston unit; and
   a hydraulic damper that accommodates at least a part of the piston unit other than the part accommodated in the hydraulic actuator inside to control a stroke motion speed of the piston unit,
   wherein the piston unit moves in conjunction with the hydraulic actuator and the hydraulic damper.

2. The hydraulic device of claim 1, wherein the hydraulic actuator includes an actuator cylinder that stores a first fluid inside and provides a space in which the piston unit performs the stroke motion according to a flow of the first fluid,

   the hydraulic damper includes a damper cylinder that stores a second fluid inside, and
   the piston unit moves the inside of the actuator cylinder and the inside of the damper cylinder simultaneously.

3. The hydraulic device of claim 2, wherein the piston unit includes an actuator piston head that is accommodated inside the actuator cylinder and performs the stroke motion in the actuator cylinder, and a damper piston head that is accommodated inside the damper cylinder and performs the stroke motion in the damper cylinder.

4. The hydraulic device of claim 3, wherein the piston unit includes a connection member that connects the actuator piston head and the damper piston head.

5. The hydraulic device of claim 4, wherein the connection member causes the actuator piston head and the damper piston head to move together in conjunction with each other, and
   when the actuator piston head ascends inside the actuator cylinder, the damper piston head also ascends inside the damper cylinder, and when the actuator piston head descends inside the actuator cylinder, the damper piston head also descends inside the damper cylinder.

6. The hydraulic device of claim 4 or 5, wherein the piston unit includes a power transmission member that transmits kinetic energy of the actuator piston head to the outside, and
   one side of the actuator piston head is coupled to the power transmission member, and the other side of the actuator piston head is coupled to the connection member.

7. The hydraulic device of any one of claims 3 to 6, wherein the hydraulic actuator includes an inlet port through which fluid is introduced into the actuator cylinder, and an outlet port through which the fluid is discharged out of the actuator cylinder, and
   a control valve that controls an outflow of the fluid is provided in the outlet port.

8. The hydraulic device of claim 7, wherein the control valve is a 2-way valve controlled to be in an open state or a closed state.

9. The hydraulic device of claim 8, wherein the actuator piston head ascends inside the actuator cylinder when the control valve is in the closed state, and descends inside the actuator cylinder when the control valve is in the open state.

10. The hydraulic device of any one of claims 7 to 9, wherein the inner space of the actuator cylinder is divided into an upper chamber as an upper space and a lower chamber as a lower space based on the actuator piston head, and the actuator piston head is provided with a through hole to allow the first fluid introduced into the internal space of the actuator cylinder to flow from the upper chamber to the lower chamber.

11. The hydraulic device of claim 10, wherein a cross-sectional area of a portion where the first fluid is discharged through the outlet port is wider than that of the through hole.

12. The hydraulic device of any one of claims 3 to 11, further comprising:
    a speed control member that is disposed to surround an inner wall of the damper cylinder and controls a stroke motion speed of the piston unit.

13. The hydraulic device of claim 12, wherein the speed control member includes a protrusion that protrudes toward a center of the damper cylinder and a recession that is recessed toward the inner wall of the damper cylinder.

14. The hydraulic device of claim 13, wherein at least one protrusion is formed and at least one recession is formed, and the protrusion and recession are continuously formed along a height direction of the damper cylinder.

15. The hydraulic device of claim 13 or 14, wherein when the damper piston head is positioned at the protrusion, the stroke motion speed of the piston unit decreases, and when the damper piston head is positioned at the recession, the stroke motion speed of the piston unit increases.

FIG. 1

FIG. 2

FIG. 3

FIG. 4

1000(1001)

FIG. 5

FIG. 6

1000(1003)

FIG. 7

210

235

Valve Close

120

140

310

130

FIG. 8

FIG. 9

Fig. 10

321

$d_a$

slow

322

$d_b$

fast

310

130

320

FIG. 11

300

321

322

B

B

310

320

FIG. 12

B-B

310

$r_b$  $r_a$

321

322

FIG. 13A          FIG. 13B          FIG. 13C

322          322          322

321          321          321

FIG. 14A

FIG. 14B

322

321

321

322

FIG. 15A

FIG. 15B

Europäisches Patentamt
European Patent Office
Office européen des brevets

# EUROPEAN SEARCH REPORT

**Application Number**

EP 24 21 4822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/152934 A1 (MIYASATO EIKO [JP] ET AL) 4 June 2015 (2015-06-04) | 1-5,7-9, 12-15 | INV. F15B15/14 |
| Y | * figures Fig. 5,2,3 * | 6 | F15B15/22 |
| A | | 10,11 | F15B15/20 |
|  | ----- | | F16F9/49 |
| X | US 2 948 358 A (BORN JAMES H ET AL) 9 August 1960 (1960-08-09) | 1-5,7-9, 12 | F16F9/512 |
| Y | * figure 1 * | 6 | ADD. |
| A | | 10,11, 13-15 | F15B15/17 F16F9/48 |
|  | ----- | | |
| X | EP 3 835 600 B1 (SMC CORP [JP]) 16 August 2023 (2023-08-16) | 1-6 | |
| A | * figures 1,3,5,4a * | 7,8, 10-13,15 | |
|  | ----- | | |
| X | US 2 991 760 A (RHINE JULES A) 11 July 1961 (1961-07-11) | 1-9 | |
| Y | * figures 1,2 * | 6 | |
| A | | 10-12 | |
|  | ----- | | TECHNICAL FIELDS SEARCHED (IPC) |
| X | DE 10 2012 001271 A1 (FLUDICON GMBH [DE]) 25 July 2013 (2013-07-25) * figure 1 * | 1-7,9 | F15B F16F |
|  | ----- | | |
| X | EP 2 357 378 A2 (KOGANEI LTD [JP]) 17 August 2011 (2011-08-17) | 1-5,7-9, 12-15 | |
| Y | * figures 1A,1b,2,3 * | 6 | |
| A | | 10,11 | |
|  | ----- | | |
| X | DE 199 59 799 A1 (DAUTEL GMBH [DE]) 13 June 2001 (2001-06-13) * figure 1; examples 7,8,17,1,2 * | 1-9 | |
|  | ----- | | |
| A | JP S62 123042 U (NISSIN ELECTRIC CO.) 5 August 1987 (1987-08-05) * figures 1,2,3,5 * | 1,12-15 | |
|  | ----- | | |

The present search report has been drawn up for all claims

| Place of search | Date of completion of the search | Examiner |
|---|---|---|
| Munich | 13 March 2025 | Deligiannidis, N |

EPO FORM 1503 03.82 (P04C01)

## ANNEX TO THE EUROPEAN SEARCH REPORT
## ON EUROPEAN PATENT APPLICATION NO.

EP 24 21 4822

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| US 2015152934 | A1 | 04-06-2015 | CN | 104583638 A | 29-04-2015 |
| | | | DE | 112013003120 T5 | 19-03-2015 |
| | | | JP | 5699992 B2 | 15-04-2015 |
| | | | JP | 2014005850 A | 16-01-2014 |
| | | | KR | 20150015001 A | 09-02-2015 |
| | | | RU | 2015101712 A | 10-08-2016 |
| | | | TW | 201413136 A | 01-04-2014 |
| | | | US | 2015152934 A1 | 04-06-2015 |
| | | | WO | 2013190960 A1 | 27-12-2013 |
| US 2948358 | A | 09-08-1960 | NONE | | |
| EP 3835600 | B1 | 16-08-2023 | BR | 112021004709 A2 | 01-06-2021 |
| | | | CN | 112689714 A | 20-04-2021 |
| | | | EP | 3835600 A1 | 16-06-2021 |
| | | | JP | 7137163 B2 | 14-09-2022 |
| | | | JP | WO2020054322 A1 | 30-08-2021 |
| | | | KR | 20210049935 A | 06-05-2021 |
| | | | RU | 2769896 C1 | 07-04-2022 |
| | | | TW | 202020318 A | 01-06-2020 |
| | | | WO | 2020054322 A1 | 19-03-2020 |
| US 2991760 | A | 11-07-1961 | NONE | | |
| DE 102012001271 | A1 | 25-07-2013 | NONE | | |
| EP 2357378 | A2 | 17-08-2011 | EP | 2357378 A2 | 17-08-2011 |
| | | | JP | 2011169359 A | 01-09-2011 |
| DE 19959799 | A1 | 13-06-2001 | NONE | | |
| JP S62123042 | U | 05-08-1987 | JP | H0723861 Y2 | 31-05-1995 |
| | | | JP | S62123042 U | 05-08-1987 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020020017701